# EUROPÄISCHE PATENTSCHRIFT

(11) **EP 3 176 925 B1**
(45) Veröffentlichungstag und Bekanntmachung des Hinweises auf die Patenterteilung: **03.10.2018**
(21) Anmeldenummer: 16002461.8
(22) Anmeldetag: 18.11.2016
(51) Int. Cl.: H02K 15/14, B23P 11/02, B25J 15/00, B25J 15/02, B25J 19/00

(54) **VERFAHREN UND HANDHABUNGSVORRICHTUNG ZUR HERSTELLUNG VON STATOREN FÜR ELEKTRISCHEN MASCHINEN**
METHOD AND DEVICE FOR THE PRODUCTION OF STATORS FOR ELECTRIC MACHINES
PROCÉDÉ ET DISPOSITIF DE PRODUCTION DE STATORS POUR MACHINES ÉLECTRIQUES

(30) Priorität: 03.12.2015 DE 102015015618
(43) Veröffentlichungstag der Anmeldung: 07.06.2017
(73) Patentinhaber: AUDI AG, 85045 Ingolstadt (DE)
(72) Erfinder: Schmidt, Jörg, DE - 85057 Ingolstadt (DE)
(74) Vertreter: Eickmeyer, Dietmar

(56) Entgegenhaltungen:
- EP-A2- 0 508 256
- WO-A1-2010/029334
- WO-A2-2012/027855
- CN-U- 203 509 492
- CN-U- 203 649 792
- JP-A- 2014 233 805

## Beschreibung

Die Erfindung betrifft ein Verfahren zur Montage eines Stators einer elektrischen Maschine sowie eine Handhabungsvorrichtung zur Durchführung des erfindungsgemäßen Verfahrens.

Die elektrischen Maschinen von elektrisch betriebenen Fahrzeugen oder Hybridfahrzeugen weisen einen Stator und einen Rotor auf, der sich relativ zu dem Stator dreht. Durch ein sich drehendes Magnetfeld des stehenden Stators wird der Rotor in Bewegung gebracht. Durch die hohen Leistungsanforderungen beim Betrieb in einem Fahrzeug besteht die Notwendigkeit, die elektrische Maschine zu kühlen.

Zur Kühlung der elektrischen Maschine wird in der Regel auf das runde Blechpaket des Stators ein Kühlzylinder aufgezogen, der sich an das Blechpaket anpresst. Typisches Material dafür ist z.B. Aluminium. Zwischen diesem Kühlzylinder und dem weiter außen liegenden Motorgehäuse wird Kühlwasser in die elektrische Maschine eingebracht, durch welches der Aluminiumkörper des Kühlzylinders gekühlt und somit die Wärme aus dem Blechpaket des Stators abgeführt wird.

Das enge Anliegen des Kühlzylinders am Blechpaket des Stators wird durch dessen Erwärmung auf ca. 200 °C realisiert, so dass er sich ausdehnen kann und dadurch über einen das Aufschrumpfen auf den Stator ermöglichenden größeren Innendurchmesser als das Blechpaket des Stators aufweist.

Ein Problem dabei ist jedoch die weitere Verarbeitung des Statorpaketes mit aufgeschrumpften Kühlzylinder in dem erwärmten Zustand. Für eine manuelle Weiterverarbeitung muss der Stator zunächst abgekühlt werden oder es muss mit thermisch isolierenden Handschuhen gearbeitete werden. Die Abkühlung könnte über die Zeit erfolgen, wodurch der Montageprozess in unerwünschter Weise zeitlich lang würde.

Aus der CN 200 309 492 U ist ein Verfahren zur automatischen Montage eines Stators und eines hohlzylindrischen Statorgehäuses mittels eines Roboters bekannt, indem zunächst ein auf eine hohe Temperatur erhitztes Statorgehäuse und ein Stator bereitgestellt werden und anschließend mittels eines Roboters der Stator erfasst und in den Hohlraum des Statorgehäuses gepresst wird.

Des Weiteren beschreibt die WO 2012/027 855 A2 ein Verfahren sowie eine Vorrichtung zum Herstellen eines Blechstapelkörpers, bei welchem zuerst aus mehreren identischen Blechteilen in einer Kavität eines Werkzeugs ein Stapel gebildet wird, wobei zwischen den Blechteilen thermisch aushärtbare Kleberschichten vorgesehen sind. Danach werden die Blechteile zur Aushärtung der Kleberschichten unter Bildung des Blechstapelkörpers aufgeheizt und verpresst. Dabei ist die Kontur der Kavität des Werkzeugs mindestens teilweise passgenau mit der Kontur der Blechteile. Aufgrund des Materialkontakts zwischen dem Blechstapelkörper und der Kavität wird beim Aufheizen der Blechteile ein überwiegender Teil der zum Aufheizen nötigen Energie durch das Werkzeug in jedes einzelne Blechteil eingeleitet, wodurch die Aushärtung der Kleberschichten bewirkt wird. Im Werkzeug sind Leitungen integriert, über welche ein Fluid zum Einbringen von Wärmeenergie in das Werkzeug und damit auch in die Blechteile geleitet wird. Ferner ist das Werkzeug mit einer Zwangskühlung ausgebildet, um den Blechstapel schnell auf eine Temperatur abzukühlen, um dessen Weiterverarbeitung oder Lagerung zu ermöglichen.

Eine Abkühlvorrichtung für die Herstellung einer Welle aus Wellenteilen mittels eines Schrumpfprozesses ist aus der CN 203 649 792 U bekannt. Diese Abkühlvorrichtung besteht aus zwei Greifarmen mit jeweils einem Greifbereich, der an die Kontur der Wellenteile angepasst ist. Ferner sind in den Greifarmen Kühlkanäle angeordnet, durch welche Kühlwasser geleitet wird.

Die EP 0 508 256 A2 beschreibt einen Greifer für Elektromotorteile, mit welchem Komponenten von unterschiedlicher Größe gegriffen werden können.

Aus der JP 2014 233 805 A ist ein Greifer mit zwei Greifelementen bekannt, bei dem zwischen einem Greiferarm und den beiden Greifelementen ein Kraftsensor angeordnet ist. Um diesen Kraftsensor vor Wärme, die von einem in dem Greiferarm angeordneten Motor erzeugt wird, zu schützen, ist in dem Bereich zwischen dem Motor und dem Kraftsensor ein Wärmespeicher vorgesehen.

Ein Verfahren zur Herstellung einer elektrischen Maschine besteht gemäß der WO 2010/029334 darin, dass zunächst ein Stator in eine erhitzte Stahlhülse eingefügt und anschließend diese Baugruppe gekühlt und in ein erhitztes Gehäuse eingebracht wird.

Es ist Aufgabe der Erfindung ein Verfahren zur Montage eines Stators aus Motorkomponenten, wie Statorspulen aufweisenden Statorblechpaketen und auf diese Statorblechpakete aufzuschrumpfenden Kühlzylinder von elektrischen Maschinen anzugeben, mit dem kurze Montagezeiten erzielt werden. Ferner ist es Aufgabe der Erfindung eine Handhabungsvorrichtung zur Durchführung des erfindungsgemäßen Verfahrens anzugeben.

Die erstgenannte Aufgabe wird gelöst durch ein Verfahren mit den Merkmalen des Patentanspruchs 1.

Ein solches Verfahren zur Herstellung von Statoren für elektrische Maschinen aus Motorelementen zeichnet sich erfindungsgemäß dadurch aus, dass
- der Stator aus mehreren Motorelementen montiert und im Montageablauf wenigstens ein die Erwärmung wenigstens eines Motorelementes erforderlicher Montageschritt und/oder Bearbeitungsschritt durchgeführt wird,
- ein mit einem Wärmespeicherkörper ausgebildeter Greifer einer Handhabungsvorrichtung bereitgestellt wird, wobei der Greifer mit einer Kontaktfläche für eine Kontaktherstellung mit dem erwärmten Motorelement ausgebildet ist,
- das erwärmte Motorelement durch Kontaktherstellung des Greifers mit dem Motorelement abgekühlt wird, und
   folgende Verfahrensschritte durchgeführt werden:
   a) Bereitstellen eines ersten hohlzylinderförmigen Motorelementes,
   b) Bereitstellen eines zweiten hohlzylinderförmigen Motorelementes, welches zum Aufschrumpfen auf das erste Motorelement ausgebildet ist,
   b1) Bereitstellen eines weiteren zweiten Motorelementes zur Montage auf einem weiteren ersten Motorelement,
   c) Erwärmen des zweiten Motorelementes auf eine für das Aufschrumpfen desselben auf das erste Motorelement geeignete Temperatur,
   d) Aufschieben des zweiten Motorelementes auf das erste Motorelement in einer Bearbeitungsstation,
   e) Abkühlen des auf das erste Motorelement aufgeschrumpften zweiten Motorelementes durch Kontaktherstellung des Greifers mit dem zweiten Motorelement,
   f) Entfernen des auf das erste Motorelement aufgeschrumpften zweiten Motorelementes mittels des Greifers der Handhabungsvorrichtung aus der Bearbeitungsstation, und
   g) Erwärmen des weiteren zweiten Motorelementes durch Kontaktherstellung mit dem Greifer, indem die mit den Verfahrensschritten e) und f) gespeicherte Wärme des Greifers von dem weiteren zweiten Motorelement aufgenommen wird.

Bei diesem erfindungsgemäßen Verfahren wird die Wärme, die für die Durchführung eines Montageschrittes und/oder Bearbeitungsschrittes einem Motorelement zugeführt wird, mittels des Greifers einer Handhabungsvorrichtung wieder abgeführt, der einen Wärmespeicherkörper aufweist und die aus dem Wärmeelement abgeführte Wärme aufnimmt. Hierzu weist der Greifer eine Kontaktfläche auf, so dass bei einem Kontakt dieser Kontaktfläche mit dem erwärmten Motorelement durch Wärmeleitung die Wärme aus dem Motorelement an den Greifer abgegeben wird. Besonders vorteilhaft ist es dabei, wenn die Kontaktfläche des Greifers an die äußere Kontur des Motorelementes angepasst ist, so dass der Greifer beim Greifen des Motorelementes das erwärmte Motorelement im Wesentlichen vollständig und formschlüssig umschließen kann.

Ein die Erwärmung eines Motorelementes erforderlicher Montageschritt stellt bspw. das Aufschrumpfen eines Kühlzylinders auf ein Statorblechpaket oder das Aufschrumpfen eines Statorgehäuses auf einen bereits auf das Statorblechpaket aufgeschrumpften Kühlzylinder dar. Das Statorblechpaket, der Kühlzylinder sowie das Statorgehäuse sind Motorelemente zur Herstellung eines Stators für eine elektrische Maschine.

Ein die Erwärmung eines Motorelementes erforderlicher Bearbeitungsschritt stellt bspw. das Imprägnieren eines Statorblechpaketes dar, bei welchem das Statorspulen aufweisende Statorblechpaket erwärmt wird, damit das Imprägnierharz in das Blechpaket besser eindringen kann. Damit sich das daran anschließende Aufschrumpfen eines Kühlzylinders auf das Statorblechpaket durchführen lässt, muss das Statorblechpaket abgekühlt werden, welches mittels des erfindungsgemäßen Greifers einer Handhabungsvorrichtung durchgeführt wird, indem das abzukühlende Statorblechpaket von diesem Greifer aufgenommen und einem Verarbeitungsbereich zur Durchführung des nächsten Montageschrittes, bspw. des Aufschrumpfens des Kühlzylinders zugeführt und hierbei das Statorblechpaket durch eine Wärmeübertragung auf den Greifer abgekühlt wird.

Zum Aufschrumpfen des Kühlzylinders als zweites Motorelement auf ein Statorblechpaket als erstes Motorelement wird der Kühlzylinder erwärmt, so dass sich dessen Innendurchmesser auf einen gegenüber dem Außendurchmesser des Statorblechpaketes größeren Innendurchmesser aufweitet. In diesem erwärmten Zustand des Kühlzylinders kann der Kühlzylinder auf das Statorblechpaket geschoben werden. Um diese derart hergestellte Motorkomponente nach dem Aufschrumpfprozess weiterzuverarbeiten, muss diese abgekühlt werden. Dieses Abkühlen wird mittels des erfindungsgemäßen Greifers einer Handhabungsvorrichtung durchgeführt, indem der abzukühlende Kühlzylinder von diesem Greifer aufgenommen und einem Verarbeitungsbereich zur Durchführung des nächsten Montageschrittes zugeführt wird, während des Kontaktes des Greifers mit dem Kühlzylinder wird dieser durch eine Wärmeübertragung auf den Greifer abgekühlt. Entsprechendes gilt, wenn auf den bereits auf das Statorblechpaket aufgeschrumpften Kühlzylinder als drittes Motorelement ein Statorgehäuse aufgeschrumpft wird.

In vorteilhafter Weise wird die mit dem Abkühlen des zweiten Motorelementes, bspw. des Kühlzylinders in dem Greifer gespeicherte Wärme dazu benutzt, zur Herstellung des nächsten Stators die gespeicherte Wärme auf dessen Kühlzylinder als weiteres zweites Motorelement zu übertragen, um diesen weiteren Kühlzylinder auf das weitere Statorblechpaket aufzuschrumpfen. In der Regel muss die Temperatur dieses weiteren Kühlzylinders auf die für das Aufschrumpfen auf das weitere Statorblechpaket erforderliche Temperatur erhöht werden, jedoch ist die hierfür erforderliche Wärmemenge geringer im Vergleich zu derjenigen Wärmemenge, die zur Erwärmung eines auf Umgebungstemperatur sich befindenden Kühlzylinders erforderlich wäre. Entsprechendes gilt auch bei einem Statorgehäuse als zweites Motorelement, wobei in diesem Fall der bereits auf das Statorblechpaket aufgeschrumpfte Kühlzylinder als erstes Motorelement anzusehen wäre.

Eine vorteilhafte Ausgestaltung der Erfindung sieht vor, dass ein Greifer bereitgestellt wird, mit welchem durch gleichzeitige Kontaktherstellung sowohl mit dem zweiten Motorelement als auch mit einem weiteren zweiten Motorelement das zweite Motorelement abgekühlt und das weitere Motorelement über Wärmeleitung in dem Greifer erwärmt wird.

Mit einem solchen erfindungsgemäßen Greifer wird zunächst das zu erwärmen zweite Motorelement und anschließend das abzukühlende zweite Motorelement oder umgekehrt aufgenommen, wodurch ein direkter Wärmefluss aus dem abzukühlenden zweiten Motorelement über den Greifer in das zu erwärmende zweite Motorelement entsteht. Durch diesen direkten Wärmeübergang von dem abzukühlenden zweiten Motorelement auf das zu erwärmende zweite Motorelement wird zusätzlich Wärmeenergie eingespart, so dass gegebenenfalls nur noch eine geringe Energie erforderlich ist, um das zu erwärmende zweite Motorelement auf die für das Aufschrumpfen erforderliche Temperatur zu bringen. Als zweites Motorelement ist entweder der auf das Statorblechpaket aufzuschrumpfende Kühlzylinder oder das Statorgehäuse anzusehen, welches auf den bereits auf das Statorgehäuse aufgeschrumpften Kühlzylinder aufgeschrumpft wird.

Eine weitere bevorzugte Ausgestaltung der Erfindung sieht folgende Verfahrensschritte vor:
h) Bereitstellen eines Statorspulen aufweisenden Statorblechpaketes als erstes Motorelement, eines Kühlzylinders als zweites Motorelement und eines Statorgehäuses als drittes Motorelement zur Montage auf den Kühlzylinder,
i) Durchführen der Verfahrensschritte c) und f) mit dem Kühlzylinder als zweites Motorelement,
j) Erwärmen des Statorgehäuse auf eine für das Aufschrumpfen des Statorgehäuses auf den Kühlzylinder geeignete Temperatur zumindest durch Kontaktherstellung des Greifers mit dem Statorgehäuse, wobei mit der Kontaktherstellung die in den Verfahrensschritten c) und f) gespeicherte Wärme des Greifers von dem Statorgehäuse aufgenommen wird,
k) Ablegen des erwärmten Statorgehäuses in einer weiteren Bearbeitungsstation mittels des Greifers, und
l) Aufschieben des erwärmten Statorgehäuses auf den Kühlzylinder in der weiteren Bearbeitungsstation.

Bei dieser Weiterbildung des erfindungsgemäßen Verfahrens wird die zum Aufschrumpfen des Kühlzylinders auf das Statorblechpaket erforderliche Wärme mit dem Greifer aufgenommen und anschließend nach der Ablage in einem Weiterverarbeitungsbereich durch Greifen eines Statorgehäuses diese gespeicherte Wärme auf das Statorgehäuse übertragen, so dass nur noch eine geringe Energie erforderlich ist, um das Statorgehäuse auf die für das Aufschrumpfen auf den Kühlzylinder erforderliche Temperatur zu erwärmen.

Vorzugsweise werden nach dem Aufschrumpfen des erwärmten Statorgehäuses auf den Kühlzylinder folgende Verfahrensschritte ausgeführt:
m) Abkühlen des auf den Kühlzylinder aufgeschrumpften Statorgehäuses durch Kontaktherstellung des Greifers mit dem Statorgehäuse, und
n) Entfernen des auf den Kühlzylinder aufgeschrumpften Statorgehäuses mittels des Greifers der Handhabungsvorrichtung aus der weiteren Bearbeitungsstation und Ablegen in einem Auslagerungsbereich.

Damit wird die Wärme des auf den Kühlzylinder aufgeschrumpften Statorgehäuses mit dem Greifer wieder aufgenommen und vorzugsweise zur Herstellung eines weiteren Stators auf dessen Kühlzylinder durch Kontaktherstellung mit dem Greifer erwärmt, um anschließend die Verfahrensschritte c) bis f) auszuführen.

Eine weitere bevorzugte Weiterbildung der Erfindung sieht folgende Verfahrensschritte vor:
m) Erwärmen und Imprägnieren eines als erstes Motorelement ausgebildeten Statorblechpaketes, und
n) Abkühlen des erwärmten Statorblechpaketes durch Kontaktherstellung mit dem Greifer.

Damit wird für das Imprägnieren des Statorblechpaketes erforderliche Wärme mit dem Greifer aufgenommen und kann durch Kontaktherstellung mit einem Kühlzylinder auf diesen übertragen werden, um dadurch die für den nachfolgenden Aufschrumpfprozess erforderliche Wärmemenge gering zu halten.

Die zweitgenannte Aufgabe wird gelöst durch eine Handhabungsvorrichtung mit den Merkmalen des Patentanspruchs 7.

Eine solche Handhabungsvorrichtung mit einem Greifer zur Durchführung des erfindungsgemäßen Verfahrens zeichnet sich dadurch aus, dass der Greifer
- mit einem Wärmespeicherkörper und mit wenigstens teilweise an die äußere Kontur des zweiten Motorelementes und dritten Motorelementes angepassten Kontaktflächen ausgebildet ist, und
- mit mehreren in senkrechter Raumrichtung verlaufenden Wärmerohren ausgebildet ist, mit welchen die Wärme aus dem mit dem Greifer aufgenommenen Kühlzylinder und/oder Statorblechpaket und/oder Statorgehäuse abgeführt wird.

Damit wird eine möglichst große Kontaktfläche zwischen dem Greifer und dem zweiten bzw. dritten Motorelement erreicht, so dass idealerweise der Greifer beim Greifen des zweiten bzw. dritten Motorelementes dieses Motorelement im Wesentlichen vollständig und formschlüssig umschließt.

Mit solchen Wärmerohren wird die Wärme aus dem Kontaktbereich des Greifers mit dem zweiten oder dritten Motorelement, wie bspw. einem auf ein Statorblechpaket aufgeschrumpften Kühlzylinder oder einem auf den Kühlzylinder aufgeschrumpften Statorgehäuse abgeführt und in den kälteren Bereich der Wärmerohre transportiert

Daher sind weiterbildungsgemäß diese Wärmerohre in dem Greifer mit wenigstens zwei gegeneinander verschwenkbaren Greifelementen senkrecht verlaufend angeordnet, wobei die Greifelemente in senkrechter Raumrichtung eine Höhe größer als die Länge eines Motorelementes in axialer Richtung aufweisen, und deren unterer Bereich mit jeweils einer Kontaktfläche als Kontaktbereich ausgeführt ist.

Hierbei nutzen die Wärmerohre für den durch Verdampfen und Kondensieren eines Wärmeträgermediums bewirkten Wärmetransport die Gravitation aus, weshalb der Wärmetransport nur in eine Richtung möglich ist, so dass im Betrieb des Greifers der Kontaktbereich des Greifers im Bereich der wärmeaufnehmenden Verdampfungszone der Wärmerohre unten liegt und ein höheres Temperaturniveau aufweist als die senkrecht darüber liegende wärmeabführende Seite (Kondensationszone) der Wärmerohre. Im Bereich der wärmeabführenden Seite der Wärmerohre kann die Wärme über den Greifer an die Umgebung abgegeben werden.

Durch die segmentartige Ausbildung der Greifelemente ist es möglich, zylinderförmige Motorelemente mit unterschiedlichen Durchmessern mit dem Greifer aufzunehmen und zu transportieren.

Ferner ist es weiterbildungsgemäß vorteilhaft, wenn der obere Bereich der Greifelemente mit einem weiteren Kontaktbereich zur Aufnahme eines zu erwärmenden Motorelementes ausgebildet ist.

So kann mit diesem weiteren Kontaktbereich der Greifer sowohl ein abzukühlendes Motorelement als auch ein zu erwärmendes Motorelement aufnehmen. So wird die von dem abzukühlenden Motorelement abgeführte Wärme über die Wärmerohre in den für das zu erwärmende Motorelement vorgesehenen Kontaktbereich transportiert und dort auf dieses Motorelement übertragen.

Sind die Wärmerohre bspw. als dünne Kupferrohre ausgeführt, kann das Wärmeträgermedium auch ohne Gravitation, nämlich ausschließlich über eine Kapillarwirkung transportiert werden. Daher ist es nicht erforderlich, dass solche Kupferrohre in senkrechter Raumrichtung verlaufen, d.h. die aus dem Kontaktbereich mit dem abzukühlenden Motorelement abzuführende Wärme kann in beliebige Bereiche des Greifers transportiert werden, insbesondere an die Umfangsfläche des Greifers, um eine schnelle Wärmeabgabe an die Umgebung zu erreichen.

Schließlich ist es weiterbildungsgemäß vorteilhaft, wenn der Greifer mit einer hohen Wärmekapazität und/oder einer hohen Wärmeleitfähigkeit ausgebildet ist.

Die Erfindung wird nachfolgend anhand von Ausführungsbeispielen unter Bezugnahme auf die beigefügten Figuren ausführlich beschrieben. Es zeigen:
- Figur 1: eine schematische Darstellung eines Verfahrensablaufes, welcher das Montieren und die Herstellung eines Stators für eine elektrische Maschine zur Erläuterung des erfindungsgemäßen Verfahrens beinhaltet,
- Figur 2: eine schematische Schnittdarstellung auf einen Greifer einer Handhabungsvorrichtung gemäß Figur 1 mit einer Motorkomponente aus einem Statorblechpaket mit aufgeschrumpften Kühlzylinder,
- Figur 3: eine schematische Schnittdarstellung eines Greifelementes eines Greifers gemäß Figur 2 mit Wärmerohren (Heatpipes),
- Figur 4: eine schematische Seitenansicht eines Greifers mit Wärmerohren gemäß Figur 3, und
- Figur 5: eine schematische Seitenansicht eines Greifers nach Figur 3 mit einem abzukühlenden Motorelement und einem zu erwärmenden Motorelement.

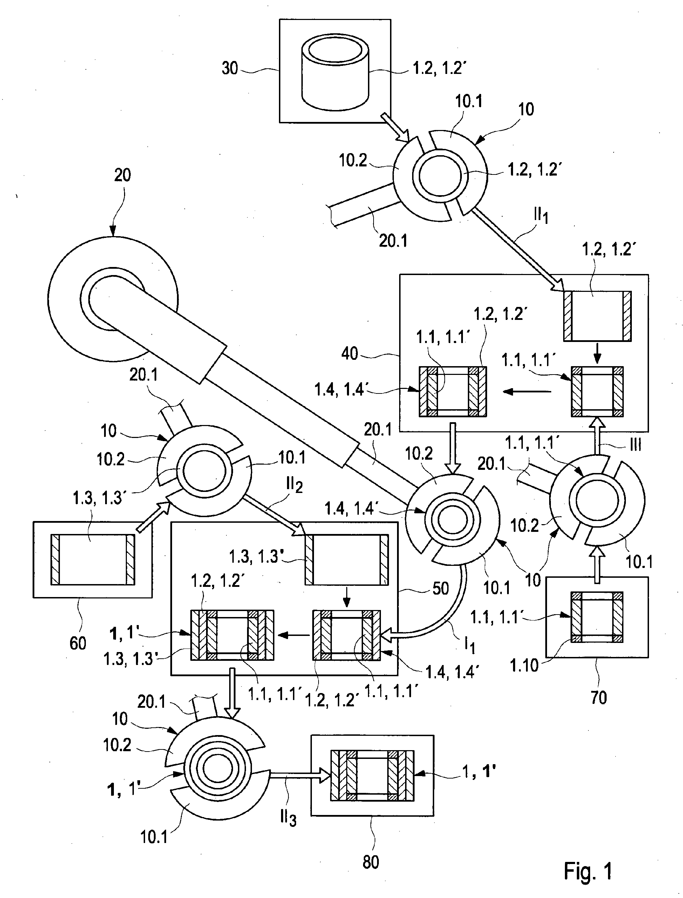

Im Folgenden soll i. V. mit Figur 1 die Herstellung und Montage eines Stators 1 für eine elektrische Maschine aus Motorelementen beschrieben werden. Ein solcher Stator 1 wird aus den Motorelementen Statorblechpaket 1.1 mit Statorspulen 1.10, Kühlzylinder 1.2 und Statorgehäuse 1.3 hergestellt. Zur Montage wird der Kühlzylinder 1.2 nach vorheriger Erwärmung auf eine für das Aufschrumpfen geeignete Temperatur auf das Statorblechpaket 1.1 aufgeschrumpft und nach dessen Abkühlung in einem weiteren Montageschritt das Statorgehäuse 1.3 nach vorheriger Erwärmung auf eine für das Aufschrumpfen geeignete Temperatur auf den Kühlzylinder 1.2, der seinerseits bereits auf das Statorblechpaket 1.1 aufgeschrumpft ist, ebenso aufgeschrumpft. Gemäß Figur 1 werden diese Montage- und Herstellungsschritte an unterschiedlichen Bearbeitungsstationen mittels einer als Roboter ausgebildeten Handhabungsvorrichtung 20 ausgeführt. Diese Handhabungsvorrichtung 20 umfasst einen Roboterarm 20.1, an dessen Ende ein Greifer 10 mit zwei segmentartigen Greifelementen 10.1 und 10.2 zum Aufnehmen der Motorelemente und zum Transport zwischen den Bearbeitungsstationen angeordnet ist.

Das Aufschrumpfen des Kühlzylinders 1.2 auf das Statorblechpaket 1.1 erfolgt nach einer Erwärmung auf die für das Aufschrumpfen erforderliche Temperatur in einer als Presse ausgebildeten Bearbeitungsstation 40 durch Aufschieben des Kühlzylinders 1.2 auf das Statorblechpaket 1.1. Hierzu werden die erforderlichen Motorelemente, nämlich das Statorblechpaket 1.1 und der Kühlzylinder 1.2 entweder mittels der Handhabungsvorrichtung 20 oder in anderer Weise der Bearbeitungsstation 40 zugeführt. Die Erwärmung auf die für das Aufschrumpfen erforderliche Temperatur des Kühlzylinders 1.2 von ca. 200 °C kann innerhalb der Bearbeitungsstation 40 oder einer dieser vorgeschalteten weiteren Bearbeitungsstation (in Figur 1 nicht dargestellt) durchgeführt werden.

Nach dem Aufschieben des Kühlzylinders 1.2 auf das Statorblechpaket 1.1 muss diese Motorkomponente 1.4 aus der Bearbeitungsstation 40 entfernt und einer ebenso als Presse ausgebildeten weiteren Bearbeitungsstation 50 zugeführt werden. Dieser Arbeitsgang I₁ erfolgt, insbesondere aufgrund einer Größenordnung von ca. 50 kg dieser Motorkomponente 1.4 mittels des Greifers 10 der Handhabungsvorrichtung 20. In dieser weiteren Bearbeitungsstation 50 wird auf diese Motorkomponente 1.4, also auf dessen Kühlzylinder 1.2 ein Statorgehäuse 1.3 aufgeschrumpft. Hierzu muss jedoch diese Motorkomponente 1.4 zuerst abgekühlt werden.

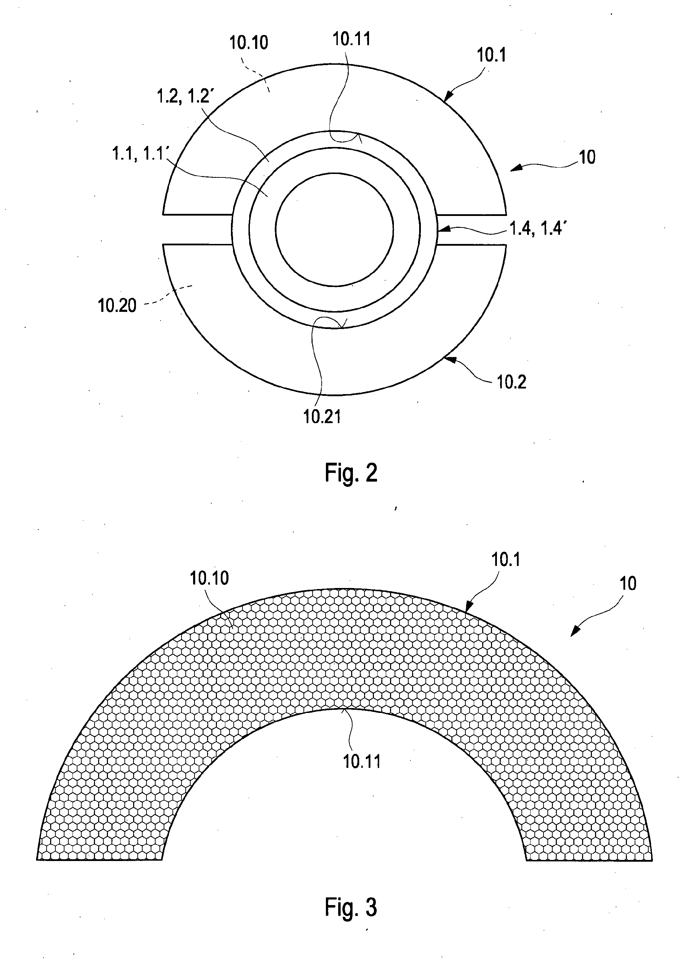

Die Greifelemente 10.1 und 10.2 des Greifers 10 weisen Wärmespeicherkörper auf, so dass während des Arbeitsganges I₁ die Motorkomponente 1.4, also der Kühlzylinder 1.2 abgekühlt, d.h. dessen Wärme durch Wärmeleitung auf den Wärmespeicherkörper des Greifers 10 übertragen wird. Um möglichst große Kontaktflächen 10.11 und 10.21 zwischen den Greifelementen 10.1 und 10.2 und dem Kühlzylinder 1.2 zu realisieren, sind deren inneren Umfangsflächen an die äußere Kontur des Kühlzylinders 1.2 im Wesentlichen angepasst, wie dies in Figur 2 schematisch dargestellt ist. Durch dieses nahezu vollständige und formschlüssige Umschließen des Kühlzylinders 1.2 durch die Kontaktflächen 10.11 und 10.21 wird die Wärme des Kühlzylinders 1.2 an die Greifelemente 10.1 und 10.2 des Greifers 10 abgegeben. Die inneren Umfangsflächen, d.h. die Kontaktflächen 10.11 und 10.21 bestehen aus einem gut wärmeleitenden Material, bspw. Kupfer, wodurch die Wärmeübertragung auf Wärmespeicherkörper der Greifelemente 10.1 und 10.2 des Greifers 10 verbessert wird.

Mit dem Transport der Motorkomponente 1.4 aus der Bearbeitungsstation 40 in die nächste Bearbeitungsstation 50 mittels des Greifers 10 der Handhabungsvorrichtung 20 wird der Kühlzylinder 1.2 abgekühlt, indem die Wärme des Kühlzylinders 1.2 in den Wärmespeicherkörpern der Greifelemente 10.1 und 10.2 gespeichert wird, so dass das Statorgehäuse 1.3 nach Erwärmung auf eine für das Aufschrumpfen auf den Kühlzylinder 1.2 der Motorkomponente 1.4 geeignete Temperatur auf den abgekühlten Kühlzylinder 1.2 aufgeschoben und aufgeschrumpft werden kann.

In einem nächsten Arbeitsgang II₂ wird mittels des Greifers 10 der Handhabungsvorrichtung 20 aus einem Lagerbereich 60 das Statorgehäuse 1.3 in die Bearbeitungsstation 50 transportiert. Bei diesem Arbeitsgang II₂ wird die während des Arbeitsganges I₁ gespeicherte Wärme auf das Statorgehäuse 1.3 übertragen. Somit ist für die Erwärmung dieses Statorgehäuses 1.3 auf die für das Aufschrumpfen erforderliche Temperatur nur noch eine geringe Energiemenge erforderlich. Die restliche Erwärmung dieses Statorgehäuses 1.3 auf die erforderliche Temperatur kann mittels eines in die Bearbeitungsstation 50 integrierten Ofens durchgeführt werden. Mit der durch den Arbeitsgang II₂ erfolgten Übertragung der Wärme auf das Statorgehäuse 3 sind die beiden Greifelemente 10.1 und 10.2 abgekühlt.

Nach dem Aufschieben und Aufschrumpfen des Statorgehäuses 1.3 auf die Motorkomponente 1.4 wird mittels des Greifers 10 der Handhabungsvorrichtung 20 der Stator 1 aus der Bearbeitungsstation 50 entnommen und in einem Auslagerungsbereich 80 abgelegt. Bei diesem Arbeitsgang II₃ wird das Statorgehäuse 1.3 abgekühlt, da dessen Wärme auf die Wärmespeicherkörper der beiden Greifelemente 10.1 und 10.2 übertragen und dort gespeichert wird. Damit wird ein abgekühlter Stator 1 in dem Auslagerungsbereich 80 abgelegt.

Mit der nun in den beiden Greifelementen 10.1 und 10.2 gespeicherten Wärme des Statorgehäuses 1.3 kann ein weiterer Kühlzylinder 1.2' zur Montage eines weiteren Stators erwärmt werden, indem mit einem Arbeitsgang II₁ dieser weitere Kühlzylinder 1.2' aus einem Lagerbereich 30 mittels der beiden Greifelemente 10.1 und 10.2 in den Bearbeitungsbereich 40 transportiert wird und während dieses Arbeitsganges II₁ die von dem Statorgehäuse 1.3 gespeicherte Wärme auf diesen weiteren Kühlzylinder 1.2' übertragen wird. Für die restliche Erwärmung dieses weiteren Kühlzylinders 1. 2' auf die für das Aufschrumpfen auf ein weiteres Statorblechpaket 1.1' erforderliche Wärme ist damit reduziert.

Mit dem Arbeitsgang II₁ wurden die beiden Greifelemente 10.1 und 10.2 wieder abgekühlt, so dass erneut der Arbeitsgang I₁ durchgeführt werden kann, mit dem das weitere Statorblechpaket 1.1' mit dem aufgeschrumpften weiteren Kühlzylinder 1.2' als weitere Motorkomponente 1.4' zur weiteren Bearbeitung der Bearbeitungsstation 50 zugeführt wird.

Insgesamt ergibt sich damit die folgende Abfolge von Arbeitsgängen:
I₁ → II₂ → II₃ → I₁.

Vor dem Aufschrumpfen eines Kühlzylinders 1.2 auf ein Statorblechpaket 1.1 wird dieses Statorblechpaket 1.1 in einer Imprägnierstation 70 imprägniert. Hierbei wird das Statorblechpaket 1.1 mit den Statorspulen 1.10 erwärmt, damit das Harz besser eindringen kann. Die Erwärmung erfolgt mittels eines Ofens oder durch Stromfluss durch die Statorspulen 1.10. Da im Anschluss an dieses Imprägnierverfahren ein Kühlzylinder 1.2 aufgeschrumpft wird, muss zuvor diese Statorblechpaket 1.1 wieder auf Raumtemperatur gekühlt werden.

Daher wird ein Arbeitsgang III mit einem abgekühlten Greifer 10 durchgeführt, mit dem ein weiteres Statorblechpaket 1.1' aus der Imprägnierstation 70 mittels des Greifers 10 in die Bearbeitungsstation 40 transportiert wird. Bei diesem Arbeitsgang III wird diese Statorblechpaket 1.1' abgekühlt, indem dessen Wärme auf die Wärmespeicherkörper der beiden Greifelemente 10.1 und 10.2 übertragen wird. An diesen Arbeitsgang III kann sich der Arbeitsgang II₁ anschließen oder es ist auch möglich, dass vor dem Arbeitsgang III der Arbeitsgang II₁ durchgeführt wird.

Der gesamte Montage- und Bearbeitungsprozess zur Herstellung eines Stators 1 kann auch in mehreren Teilprozessen durchgeführt werden, die parallel ablaufen.

So ist es bspw. möglich, dass mittels einer Handhabungsvorrichtung 20 aufeinanderfolgend nur die Arbeitsgänge I₁ und II₁ ausgeführt werden: I₁ → II₁ → I₁. Ein weiterer Teilprozess bezieht sich dann auf die Bearbeitungsstation 50 mit einer weiteren Handhabungsvorrichtung 20 mit zugehörigem Greifer 10, mit dem die aufeinanderfolgenden Arbeitsgänge II₃ und II₂, also II₃ → II₂ → II₃ durchgeführt werden.

Der Greifer 10 kann auch mit mehr als zwei Greifelementen 10.1 und 10.2 segmentartig ausgebildet werden, so dass trotz unterschiedlichen Durchmessern der Statorblechpakete 1.1, der Kühlzylinder 1.2 und der Statorgehäuse 1.3 solche Greifelemente größtmögliche Kontaktflächen mit diesen Motorelementen 1.1, 1.2 und 1.3 bilden können. Es ist auch möglich jeweils speziell für die Arbeitsgänge I₁ und II₃, II₂ und II₃ sowie III jeweils an die Durchmesser der Motorelemente angepasste Greifelemente 10.1 und 10.2 vorzusehen.

Die beiden Greifelemente 10.1 und 10.2 des Greifers 10 können auch mit Wärmerohren (Heatpipes) als Wärmespeicherkörper ausgeführt werden. Hierfür sind gemäß Figur 3 die Greifelemente 10.1 und 10.2 (in Figur 2 ist beispielhaft nur das Greifelement 10.1 dargestellt) mit Kupferkapillaren 10.10 ausgeführt, so dass während des Betriebes der Handhabungsvorrichtung 20, insbesondere also während der Durchführung der Arbeitsvorgänge I₁, II₃ und III diese Kupferkapillaren 10.10 in senkrechter Raumrichtung (z-Richtung) verlaufen (vgl. Figur 3). Da der Wärmetransport bei solchen Kupferkapillaren 10.10 und 10.20 der Greifelemente 10.1 und 10.2 über die Kapillarwirkung dieser Kupferkapillaren erfolgt, unterstützt die Gravitation den Wärmetransport bei einem Verlauf in senkrechter Raumrichtung der Kupferkapillaren.

Daher ist es nicht erforderlich, dass solche Kupferkapillaren 10.10 und 10.20 in senkrechter Raumrichtung verlaufen, d.h. die aus dem Kontaktbereich mit einem abzukühlenden Motorelement abzuführende Wärme kann in beliebige Bereiche des Greifers 10 transportiert werden, insbesondere an die Umfangsfläche des Greifers, um eine schnelle Wärmeabgabe an die Umgebung zu erreichen.

Die beiden Greifelemente 10.1 und 10.2 weisen in senkrechter Raumrichtung (z-Richtung) eine Höhe auf, die größer ist als die Länge des Kühlzylinders 1.2 in dessen axialer Richtung, wobei der untere Bereich der beiden Greifelemente 10.1 und 10.2 als Kontaktbereich K1 mit einer entsprechenden Kontaktfläche 10.11 ausgeführt ist. Über diese Kontaktflächen 10.11 und 10.21 ergreifen die beiden Greifelemente 10.1 und 10.2 die Motorkomponente 1.4 bzw. 1.4' über dessen Kühlzylinder 1.2 bzw. 1.2' mit der Folge, dass die Wärme des Kühlzylinders 1.2 bzw. 1.2' auf die Wärmerohre 10.10 und 10.20 übertragen wird und die übertragene Wärme als Wärmestrom W in den über dem Kontaktbereich K1 sich anschließenden Bereich geführt wird. In diesem oberen Bereich der beiden Greifelemente 10.1 und 10.2 wird die von dem Kühlzylinder 1.2 bzw. 1.2' aufgenommene Wärme an die Umgebung abgestrahlt.

Die beiden Greifelemente 10.1 und 10.2 können in senkrechter Raumrichtung (z-Richtung) eine der Länge des Kühlzylinders 1.2 entsprechende Höhe aufweisen, wobei die Kupferkapillaren 10.10 und 10.20 der beiden Greifelemente 10.1 und 10.2 nicht in senkrechter Richtung aus dem Kontaktbereich K1 herausgeführt werden, sondern an der Umfangsfläche der Greifelemente 10.1 und 10.2 enden, wodurch eine schnelle Abgabe der von dem Kühlzylinder 1.2 abgeführten Wärme an die Umgebung ermöglicht wird.

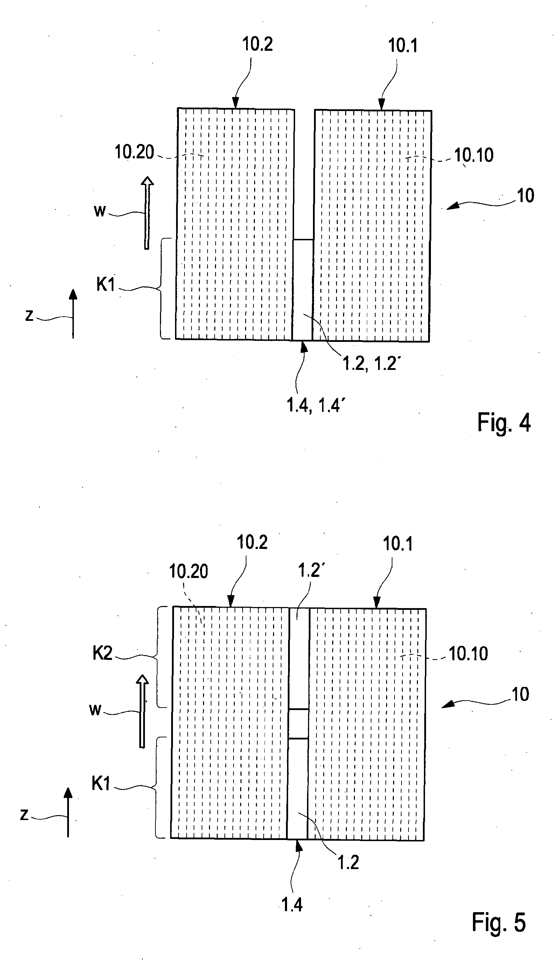

Es ist gemäß Figur 5 auch möglich, den oberen Bereich der Greifelemente 10.1 und 10.2 des Greifers 10 als weiteren Kontaktbereich K2 auszubilden, um mit diesem Kontaktbereich K2 ein zu erwärmendes Motorelement, bspw. einen Kühlzylinder 1.2 aufzunehmen, so dass mit solchen Greifelementen 10.1 und 10.2 gleichzeitig ein abzukühlendes Motorelement, also bspw. ein Kühlzylinder 1.2 und ein zu erwärmendes weiteres Motorelement, also bspw. ein weiterer Kühlzylinder 1.2' transportiert werden kann. Mit solchen Greifelementen 10.1 und 10.2 wird die Wärme des abzukühlenden Motorelementes mittels der Wärmerohre direkt auf das zu erwärmende Motorelement übertragen.

Dieses Verfahren mit einem Greifelement nach Figur 5 wird beispielhaft mit Bezug auf Figur 1 erläutert, wobei sich bei gleichen Bearbeitungsstationen 30 bis 80 jedoch eine andere Abfolge von Arbeitsgängen ergibt.

So wird der Transport der Motorkomponente 1.4 aus der Bearbeitungsstation 40 zur Bearbeitungsstation 50 gleichzeitig mit einem weiteren Kühlzylinder 1.2' aus dem Lagerbereich 30 durchgeführt. So wird bspw. mit dem Greifer 10 zuerst dieser Kühlzylinder 1.2' und anschließend die Motorkomponente 1.4 aufgenommen oder umgekehrt zuerst die Motorkomponente 1.4 und anschließend der Kühlzylinder 1.2'. Nach Ablage der Motorkomponente 1.4 in dem Bearbeitungsbereich 50 wird der während dieses Arbeitsganges I₁ erwärmte Kühlzylinder 1.2' in dem Bearbeitungsbereich 40 abgelegt.

Ebenso ist es möglich, den Arbeitsgang III gleichzeitig mit einem noch nicht imprägnierten weiteren Statorblechpaket 1.1' durchzuführen, wodurch während dieses Arbeitsganges III die Wärme des imprägnierten Statorblechpaketes 1.1 auf das noch nicht imprägnierte weitere Statorblechpaket 1.1' mittels des Greifers 10 gemäß Figur 5 übertragen wird. Nach der Ablage des abgekühlten und imprägnierten Statorblechpaketes 1.1 wird das erwärmte weitere Statorblechpaket 1.1' zum Imprägnieren in der Imprägnierstation 70 abgelegt.

Schließlich können auch die Arbeitsgänge um die Bearbeitungsstation 50 mittels einer weiteren Handhabungsvorrichtung 20 mit einem Greifer 10 gemäß Figur 5 durchgeführt werden.

So wird der Transport des Stators 1 aus der Bearbeitungsstation 50 in den Auslagerungsbereich 80 gleichzeitig mit einem weiteren Statorgehäuse 1.3' aus dem Lagerbereich 60 durchgeführt. So wird bspw. mit dem Greifer 10 zuerst dieses Statorgehäuse 1.3' und anschließend der Stator 1 aufgenommen oder umgekehrt zuerst der Stator 1 und anschließend das Statorgehäuse 1.3'. Nach Ablage des Stators 1 in dem Auslagerungsbereich 80 wird der während dieses Arbeitsganges II₃ das erwärmte Statorgehäuse 1.3' in dem Bearbeitungsbereich 50 abgelegt.

Auch dieser Greifer 10 gemäß Figur 4 oder 5 kann mit mehr als zwei Greifelementen 10.1 und 10.2 segmentartig ausgebildet werden, so dass trotz unterschiedlichen Durchmessern der Statorblechpaket 1.1, der Kühlzylinder 1.2 und der Statorgehäuse 1.3 solche Greifelemente größtmögliche Kontaktflächen mit diesen Motorelementen 1.1, 1.2 und 1.3 bilden können. Es ist ferner möglich jeweils speziell für die Arbeitsgänge I₁ und II₁, II₂ und II₃ sowie III an die Durchmesser der Motorelemente angepasste Greifelemente 10.1 und 10.2 vorzusehen.

### Bezugszeichen

- 1: Stator für eine elektrische Maschine
- 1': weiterer Stator
- 1.1: Statorblechpaket des Stators 1
- 1.10: Statorspulen des Statorblechpaketes 1.1
- 1.1': weiteres Statorblechpaket des weiteren Stators 1
- 1.2: Kühlzylinder des Stators 1
- 1.2': weiterer Kühlzylinder des weiteren Stators 1'
- 1.3: Statorgehäuse des Stators 1
- 1.3': weiteres Statorgehäuse des weiteren Stators 1
- 1.4: Motorkomponente mit Statorblechpaket 1.1 und Kühlzylinder 1.2
- 1.4': weitere Motorkomponente mit weiterem Statorblechpaket 1.1' und weiteren Kühlzylinder 1.2'

- 10: Greifer der Handhabungsvorrichtung 20
- 10.1: Greifelement des Greifers 10
- 10.10: Kupferkapillaren des Greifelementes 10.1
- 10.11: Kontaktfläche des Greifelementes 10.1
- 10.2: Greifelement des Greifers 10
- 10.20: Kupferkapillaren des Greifelementes 10.2
- 10.21: Kontaktfläche des Griffelementes 10.2

- 20: Handhabungsvorrichtung, Roboter
- 20.1: Roboterarm der Handhabungsvorrichtung 20

- 30: Lagerbereich
- 40: Bearbeitungsstation
- 50: Bearbeitungsstation
- 60: Lagerbereich
- 70: Imprägnierstation
- 80: Auslagerungsbereich

- K1: unterer Kontaktbereich
- K2: oberer Kontaktbereich

## Patentansprüche

1. Verfahren zur Herstellung von Statoren (1) für elektrische Maschinen aus Motorelementen (1.1, 1.2, 1.3), bei welchem
- der Stator (1) aus mehreren Motorelementen (1.1, 1.2, 1.3) montiert und im Montageablauf wenigstens ein die Erwärmung eines Motorelementes (1.1, 1.2, 1.3) erforderlicher Montageschritt und/oder Bearbeitungsschritt durchgeführt wird,
- ein mit einem Wärmespeicherkörper ausgebildeter Greifer (10) einer Handhabungsvorrichtung (20) bereitgestellt wird, wobei der Greifer (10) mit einer Kontaktfläche (10.11, 10.21) für eine Kontaktherstellung mit dem erwärmten Motorelement (1.1, 1.2, 1.3) ausgebildet ist,
- das erwärmte Motorelement (1.1, 1.2, 1.3) durch Kontaktherstellung des Greifers (10) mit dem Motorelement (1.1, 1.2, 1.3) abgekühlt wird, und folgende Verfahrensschritte durchgeführt werden:
a) Bereitstellen eines ersten hohlzylinderförmigen Motorelementes (1.1),
b) Bereitstellen eines zweiten hohlzylinderförmigen Motorelementes (1.2), welches zum Aufschrumpfen auf das erste Motorelement (1.1) ausgebildet ist,
b1) Bereitstellen eines weiteren zweiten Motorelementes (1.2') zur Montage auf einem weiteren ersten Motorelement (1.1'),
c) Erwärmen des zweiten Motorelementes (1.2) auf eine für das Aufschrumpfen desselben auf das erste Motorelement (1.1) geeignete Temperatur,
d) Aufschieben des zweiten Motorelementes (1.2) auf das erste Motorelement (1.1) in einer Bearbeitungsstation (40),
e) Abkühlen des auf das erste Motorelement (1.1) aufgeschrumpften zweiten Motorelementes (1.2) durch Kontaktherstellung des Greifers (10) mit dem zweiten Motorelement (1.2),
f) Entfernen des auf das erste Motorelement (1.1) aufgeschrumpften zweiten Motorelementes (1.2) mittels des Greifers (10) der Handhabungsvorrichtung (20) aus der Bearbeitungsstation (40),
und
g) Erwärmen des weiteren zweiten Motorelementes (1.2') durch Kontaktherstellung mit dem Greifer (10), indem die mit den Verfahrensschritten e) und f) gespeicherte Wärme des Greifer (10) von dem weiteren zweiten Motorelement (1.2') aufgenommen wird.

2. Verfahren nach Anspruch 1, bei dem ein Greifer (10) bereitgestellt wird, mit welchem durch gleichzeitige Kontaktherstellung sowohl mit dem zweiten Motorelement (1.2) als auch mit einem weiteren zweiten Motorelement (1.2') das zweite Motorelement (1.2) abgekühlt und das weitere Motorelement (1.2') über Wärmeleitung in dem Greifer (10) erwärmt wird.

3. Verfahren nach Anspruch 1 oder 2 mit folgenden Verfahrensschritten:
h) Bereitstellen eines Statorspulen (1.10) aufweisenden Statorblechpaketes (1.1) als erstes Motorelement, eines Kühlzylinders (1.2) als zweites Motorelement und eines Statorgehäuses (1.3) als drittes Motorelement zur Montage auf den Kühlzylinder (1.2),
i) Durchführen der Verfahrensschritte c) und f) mit dem Kühlzylinder (1.2) als zweites Motorelement,
j) Erwärmen des Statorgehäuse (1.3) auf eine für das Aufschrumpfen des Statorgehäuses (1.3) auf den Kühlzylinder (1.2) geeignete Temperatur zumindest durch Kontaktherstellung des Greifers (10) mit dem Statorgehäuse (1.3), wobei mit der Kontaktherstellung die in den Verfahrensschritten e) und f) gespeicherte Wärme des Greifers (10) von dem Statorgehäuse (1.3) aufgenommen wird,
k) Ablegen des erwärmten Statorgehäuses (1.3) in einer weiteren Bearbeitungsstation (50) mittels des Greifers (10), und
l) Aufschieben des erwärmten Statorgehäuses (1.3) auf den Kühlzylinder (1.2) in der weiteren Bearbeitungsstation (50).

4. Verfahren nach Anspruch 3 mit folgenden Verfahrensschritten:
m) Abkühlen des auf den Kühlzylinder (1.2) aufgeschrumpften Statorgehäuses (1.3) durch Kontaktherstellung des Greifers (10) mit dem Statorgehäuse (1.3), und
n) Entfernen des auf den Kühlzylinder (1.2) aufgeschrumpften Statorgehäuses (1.3) mittels des Greifers (10) der Handhabungsvorrichtung (20) aus der weiteren Bearbeitungsstation (50) und Ablegen in einem Auslagerungsbereich (80).

5. Verfahren nach Anspruch 4, bei dem der Kühlzylinder (1.2) mit der in den Verfahrensschritten m) und n) von dem Greifer (10) gespeicherten Wärme durch Kontaktherstellung mit dem Greifer (10) erwärmt wird und anschließend die Verfahrensschritte c) bis f) ausgeführt werden.

6. Verfahren nach einem der vorhergehenden Ansprüche mit folgenden Verfahrensschritten:
o) Erwärmen und Imprägnieren eines als erstes Motorelement (1.1) ausgebildeten Statorblechpaketes, und
p) Abkühlen des erwärmten Statorblechpaketes (1.1) durch Kontaktherstellung mit dem Greifer (10).

7. Handhabungsvorrichtung (20) mit einem Greifer (10) zur Durchführung des Verfahrens zur Herstellung von Statoren (1) für elektrische Maschinen aus Motorelementen (1.1, 1.2, 1.3) nach einem der vorhergehenden Ansprüche, wobei der Stator aus einem Statorblechpaket als erstes Motorelement, einem Kühlzylinder als zweites Motorelement und einem Statorgehäuse als drittes Motorelement hergestellt wird, bei dem der Greifer (10)
- mit einem Wärmespeicherkörper und mit wenigstens teilweise an die äußere Kontur des zweiten Motorelementes (1.2, 1.2') und dritten Motorelementes (1.3,1.3') angepassten Kontaktflächen (10.11, 10.21) ausgebildet ist, und
- mit mehreren in senkrechter Raumrichtung verlaufenden Wärmerohren (10.10, 10.20) ausgebildet ist, mit welchen die Wärme aus dem mit dem Greifer (10) aufgenommenen Kühlzylinder (1.2) und/oder Statorblechpaket (1.1) und/oder Statorgehäuse (1.3) abgeführt wird.

8. Handhabungsvorrichtung (20) nach Anspruch 7 bei dem der Greifer (10) mit wenigstens zwei gegeneinander verschwenkbare Greifelemente (10.1, 10.2) ausgebildet ist, wobei
- die Greifelemente (10.1,10.2) in senkrechter Raumrichtung eine Höhe größer als die Länge eines Motorelementes (1.2, 1.3) in axialer Richtung aufweisen, und
- die Greifelemente (10.1, 10.2) in deren unteren Bereich mit jeweils einer Kontaktfläche (10.11, 10.21) als Kontaktbereich (K1) ausgeführt sind.

9. Handhabungsvorrichtung (20) nach Anspruch 8, bei welcher der obere Bereich der Greifelemente (10.1, 10.2) mit einem weiteren Kontaktbereich (K2) zur Aufnahme eines zu erwärmenden Motorelementes ausgebildet ist.

## Claims

1. Process for manufacturing stators (1) for electric machines from motor elements (1.1, 1.2, 1.3), in which
- the stator (1) is assembled out of a plurality of motor elements (1.1, 1.2, 1.3) and in the assembly step at least an assembly step and/or machining step requiring the heating of a motor element (1.1, 1.2, 1.3) is carried out,
- a gripper (10) of a handling apparatus (20) formed with a heat storing body is provided, wherein the gripper (10) is formed with a contact surface (10.11, 10.21) for establishing contact with the heated motor element (1.1, 1.2, 1.3),
- the heated motor element (1.1, 1.2, 1.3) is cooled by establishing contact of the gripper (10) with the motor element (1.1, 1.2, 1.3), and the following process steps are carried out:
a) providing a first hollow cylindrical motor element (1.1),
b) providing a second hollow cylindrical motor element (1.2) that is formed for shrinking onto the first motor element (1.1),
b1) providing a further second motor element (1.2') for mounting on a further first motor element (1.1')
c) heating the second motor element (1.2) to a temperature suitable for shrinking the same onto the first motor element (1.1),
d) sliding the second motor element (1.2) onto the first motor element (1.1) in a processing station (40),
e) cooling the second motor element (1.2) shrunk on the first motor element (1.1) by establishing contact of the gripper (10) with the second motor element (1.2),
f) removing the second motor element (1.2) shrunk on the first motor element (1.1) by means of the gripper (10) of the handling apparatus (20) from the processing station (40), and
g) heating the other second motor element (1.2') by establishing contact with the gripper (10) in that the heat of the gripper (10) stored with the process steps e) and f) from the other second motor element (1.2') is absorbed.

2. Process according to claim 1, in which a gripper (10) is provided, with which by simultaneously establishing contact both with the second motor element (1.2) and with another second motor element (1.2') the second motor element (1.2) is cooled and the other motor element (1.2') is heated by heat conduction in the gripper (10).

3. Process according to claim 1 or 2, with the following process steps:
h) providing a stator coil (1.10) having laminated stator core (1.1) as a first motor element, a cooling cylinder (1.2) as a second motor element and a stator housing (1.3) as a third motor element for mounting on the cooling cylinder (1.2),
i) carrying out the process steps c) and f) with the cooling cylinder (1.2) as a second motor element,
j) heating the stator housing (1.3) to a temperature suitable for shrinking the stator housing (1.3) onto the cooling cylinder (1.2) at least by establishing contact of the gripper (10) with the stator housing (1.3), wherein with the contact establishment, the heat of the gripper (10) stored in the process steps e) and f) is absorbed by the stator housing (1.3),
k) placing the heated stator housing (1.3) in a further processing station (50) by means of the gripper (10), and
I) sliding the heated stator housing (1.3) onto the cooling cylinder (1.2) in the further processing station (50).

4. Process according to claim 3, with the following process steps:
m) cooling the stator housing (1.3), shrunk onto the cooling cylinder (1.2), by establishing contact of the gripper (10) with the stator housing (1.3), and
n) removing the stator housing (1.3), shrunk onto the cooling cylinder (1.2), by means of the gripper (10) of the handling apparatus (20) from the further processing station (50) and depositing in a swapping area (80).

5. Process according to claim 4, in which the cooling cylinder (1.2) is heated with the heat stored in the process steps m) and n) by the gripper (10) by establishing contact with the gripper (10) and finally executing the process steps c) to f).

6. Process according to one of the preceding claims with the following process steps:
o) heating and impregnating a laminated stator core formed as a first motor element (1.1), and
p) cooling the heated laminated stator core (1.1) by establishing contact with the gripper (10).

7. Handling apparatus (20) with a gripper (10) for executing the process for manufacturing stators (1) for electric machines from motor elements (1.1, 1.2, 1.3) according to one of the preceding claims, wherein the stator is manufactured from a laminated stator core as a first motor element, a cooling cylinder as a second motor element and stator housing as a third motor element, in which the gripper (10)
- is formed with a heat storage body and at least, partially with contact surfaces (10.11, 10.21) adapted to the outer contour of the second motor element (1.2, 1.2') and third motor element (1.3,1.3'), and
- is formed with a plurality of vertically extending heat pipes (10.10, 10.20), with which the heat absorbed by the gripper (10) from the cooling cylinder (1.2) and/or laminated stator core (1.1) and/or stator housing (1.3) is dissipated.

8. Handling apparatus (20) according to claim 7 in which the gripper (10) is formed with at least two mutually swivelled gripping elements (10.1, 10.2), wherein
- the gripping elements (10.1, 10.2) in vertical spatial direction have a height greater than the length of a motor element (1.2, 1.3) in the axial direction, and
- the gripping elements (10.1, 10.2) in which the lower portion is each executed with a contact surface (10.11, 10.21) as a contact area (K1).

9. Handling apparatus (20) according to claim 8, in which the upper portion of the gripping elements (10.1, 10.2) is formed with a further contact area (K2) for grabbing a motor element to be heated.

## Revendications

1. Procédé de fabrication de stators (1) pour des machines électriques à partir d'éléments de moteur (1.1, 1.2, 1.3), dans lequel
- le stator (1) est monté à partir de plusieurs éléments de moteur (1.1, 1.2, 1.3) et, lors du déroulement du montage, au moins une étape de montage et/ou étape de traitement nécessitant le chauffage d'un élément de moteur (1.1, 1.2, 1.3) est effectuée,
- une griffe (10), réalisée avec un corps accumulateur de chaleur, d'un dispositif de manipulation (20) est fournie, laquelle griffe (10) est réalisée avec une surface de contact (10.11, 10.21) destinée à établir un contact avec l'élément de moteur (1.1, 1.2, 1.3) chauffé,
- l'élément de moteur (1.1, 1.2, 1.3) chauffé est refroidi par l'établissement du contact entre la griffe (10) et l'élément de moteur (1.1, 1.2, 1.3),
et les étapes de procédé suivantes sont mises en oeuvre :
a) fourniture d'un premier élément de moteur (1.1) cylindrique creux,
b) fourniture d'un deuxième élément de moteur (1.2) cylindrique creux qui est réalisé pour le frettage sur le premier élément de moteur (1.1),
b1) fourniture d'un autre deuxième élément (1.2') pour le montage sur un autre premier élément de moteur (1.1'),
c) chauffage du deuxième élément de moteur (1.2) à une température convenant au frettage de celui-ci sur le premier élément de moteur (1.1),
d) poussée du deuxième élément de moteur (1.2) sur le premier élément de moteur (1.1) dans un poste de traitement (40),
e) refroidissement du deuxième élément de moteur (1.2) fretté sur le premier élément de moteur (1.1) par établissement d'un contact entre la griffe (10) et le deuxième élément de moteur (1.2),
f) retrait du deuxième élément de moteur (1.2) fretté sur le premier élément de moteur (1.1) hors du poste de traitement (40) au moyen de la griffe (10) du dispositif de manipulation (20), et
g) chauffage de l'autre deuxième élément de moteur (1.2') par établissement d'un contact avec la griffe (10), la chaleur de la griffe (10) accumulée dans les étapes de procédé e) et f) étant alors absorbée par l'autre deuxième élément de moteur (1.2').

2. Procédé selon la revendication 1, dans lequel on fournit une griffe (10) avec laquelle, par établissement simultané d'un contact aussi bien avec le deuxième élément de moteur (1.2) qu'avec l'autre deuxième élément de moteur (1.2'), le deuxième élément de moteur (1.2) est refroidi et l'autre élément de moteur (1.2') est chauffé par conduction thermique dans la griffe (10).

3. Procédé selon la revendication 1 ou 2 avec les étapes de procédé suivantes :
h) fourniture d'un paquet de tôles de stator (1.1) comportant des bobines de stator (1.10) comme premier élément de moteur, d'un cylindre de refroidissement (1.2) comme deuxième élément de moteur et d'un carter de stator (1.3) comme troisième élément de moteur en vue du montage sur le cylindre de refroidissement (1.2),
i) exécution des étapes de procédé c) et f) avec le cylindre de refroidissement (1.2) comme deuxième élément de moteur,
j) chauffage du carter de stator (1.3) à une température convenant au frettage du carter de stator (1.3) sur le cylindre de refroidissement (1.2) au moins par établissement de contact entre la griffe (10) et le carter de stator (1.3), dans lequel la chaleur de la griffe (10) accumulée dans les étapes de procédé e) et f) est absorbée par le carter de stator (1.3) avec l'établissement de contact,
k) dépôt du carter de stator (1.3) chauffé dans un autre poste de traitement (50) au moyen de la griffe (10), et
l) poussée du carter de stator (1.3) chauffé sur le cylindre de refroidissement (1.2) dans l'autre poste de traitement (50).

4. Procédé selon la revendication 3 avec les étapes de procédé suivantes :
m) refroidissement du carter de stator (1.3) fretté sur le cylindre de refroidissement (1.2) par établissement de contact entre la griffe (10) et le carter de stator (1.3), et
n) retrait du carter de stator (1.3) fretté sur le cylindre de refroidissement (1.2) hors de l'autre poste de traitement (50) au moyen de la griffe (10) du dispositif de manipulation (20) et dépôt dans une zone de stockage (80).

5. Procédé selon la revendication 4, dans lequel le cylindre de refroidissement (1.2) est chauffé avec la chaleur accumulée par la griffe (10) dans les étapes de procédé m) et n) par établissement de contact avec la griffe (10) puis les étapes de procédé c) à f) sont exécutées.

6. Procédé selon l'une quelconque des revendications précédentes avec les étapes de procédé suivantes :
o) chauffage et imprégnation d'un paquet de tôles de stator réalisé comme premier élément de moteur (1.1), et
p) refroidissement du paquet de tôles de stator (1.1) chauffé par établissement de contact avec la griffe (10).

7. Dispositif de manipulation (20) avec une griffe (10) en vue de la mise en oeuvre du procédé destiné à la fabrication de stators (1) pour des machines électriques à partir d'éléments de moteur (1.1, 1.2, 1.3) selon l'une quelconque des revendications précédentes,
dans lequel le stator est fabriqué à partir d'un paquet de tôles de stator comme premier élément de moteur, d'un cylindre de refroidissement comme deuxième élément de moteur et d'un carter de stator comme troisième élément de moteur,
dans lequel la griffe (10) est réalisée
- avec un corps accumulateur de chaleur et avec des surfaces de contact (10.11, 10.21) adaptées au moins en partie au contour extérieur du deuxième élément de moteur (1.2, 1.2') et du troisième élément de moteur (1.3, 1.3'), et
- avec plusieurs tubes de chaleur (10.10, 10.20) qui s'étendent dans la direction spatiale perpendiculaire et avec lesquels la chaleur est évacuée du cylindre de refroidissement (1.2) et/ou paquet de tôles de stator (1.1) et/ou carter de stator (1.3) pris par la griffe (10).

8. Dispositif de manipulation (20) selon la revendication 7, dans lequel la griffe (10) est réalisée avec au moins deux éléments de préhension (10.1, 10.2) pouvant pivoter l'un par rapport à l'autre, dans lequel
- les éléments de préhension (10.1, 10.2) présentent dans la direction spatiale perpendiculaire une hauteur plus grande que la longueur d'un élément de moteur (1.2, 1.3) dans la direction axiale, et
- les éléments de préhension (10.1, 10.2) sont réalisés dans leur zone inférieure avec à chaque fois une surface de contact (10.11, 10.21) comme zone de contact (K1).

9. Dispositif de manipulation (20) selon la revendication 8, dans lequel la zone supérieure des éléments de préhension (10.1, 10.2) est réalisée avec une autre zone de contact (K2) pour recevoir un élément de moteur à chauffer.
